# EUROPEAN PATENT SPECIFICATION

(11) **EP 2 801 905 B1**
(45) Date of publication and mention of the grant of the patent: **11.07.2018**
(21) Application number: 14167229.5
(22) Date of filing: 06.05.2014
(51) Int. Cl.: G06F 3/16, G06F 3/0488, G06F 21/36, G06F 21/32, G10L 15/00, G07F 7/10

(54) **Method and apparatus for unlocking a terminal device**
Verfahren und Vorrichtung zur Entriegelung einer Endgerätevorrichtung
Procédé et appareil permettant de déverrouiller un dispositif terminal

(30) Priority: 07.05.2013 CN 201310163784
(43) Date of publication of application: 12.11.2014
(73) Proprietor: Samsung Electronics Co., Ltd., Gyeonggi-do 443-742 (KR)
(72) Inventor: Yu, Xiaojie, 443-742 Gyeonggi-do (KR); Zhu, Xuan, 443-742 Gyeonggi-do (KR)
(74) Representative: Nederlandsch Octrooibureau

(56) References cited:
- EP-A2- 1 513 110
- EP-A2- 2 565 809
- GB-A- 2 346 045

## Description

### BACKGROUND OF THE INVENTION

### 1. Technical Field of the Invention

The present invention generally relates to a field of security technologies of an intelligent terminal device, and more particularly, to a method and apparatus for unlocking a terminal device.

### 2. Description of the Related Art

With the growing popularity of large-screen intelligent terminal devices, the intelligent terminal devices play an increasingly important role in our lives. Taking the smart phone for example, at present, the smart phone is a Micro-PC and stores a large amount of user data. The security features of the smart phone have become increasingly important. In order to enhance the security of the intelligent terminal device, the existing intelligent terminal device usually has a locking function.

The current mainstream technology for unlocking a touch screen is a touch screen slide-to-unlock technology. That is, first, the user predefines an unlock path on an unlock figure. Then, the user performs the sliding operation on the touch screen according to the predefined unlock path to unlock the intelligent terminal device. On the one hand, this technology may avoid improper operations incurred by touching the intelligent terminal device accidentally. On the other hand, the personalized path settings may provide only limited confidentiality to protect the security of personal information in the intelligent terminal device.

With the conventional touch screen slide-to-unlock technology, position information is obtained via the change of the contact capacitance caused by touching a metal layer on the surface of a capacitive screen with a finger. It is inconvenient to use in low outdoor temperatures. Although special gloves are available, such gloves are not widely used. At the same time, with the continuous enlargement of the screen of the terminal device, it becomes more and more difficult to operate the terminal device with one hand. It is necessary to provide an improved scheme to deal with complicated situations in actual use.

The conventional method provides a voice unlock technology. With this technology, a voice for unlocking may be recorded in advance or a password for unlocking set in advance. It is determined whether a password text obtained by voice recognition is identical with a preset text when performing the unlocking operation. Furthermore, the matching of voice information features may also be performed as auxiliary matching, to achieve the object of voice unlock.

The above voice unlock technology may be applied to the intelligent terminal device, which may ensure the security of the intelligent terminal device. However, considering that the unlock operation is frequently performed, common voice passwords are easy to be stolen. In order to solve the technical problem, a conventional method of improvement is to compare the voice password with the voiceprint of a user of the intelligent terminal device adopting a Voiceprint Recognition (VPR) technology, and further update an acoustic model via self-adaption of the voice of the user. This may not only enhance the accuracy of the recognition, but may also prevent others from cracking the unlocking operation after wiretapping an unlocking password. However, when the voice of the user changes (such as due to hoarseness caused by cough), this solution causes the user inconvenience. The usage of the voice unlock is also problematic in settings where the user must speak quietly, such as in a conference room. Therefore, the various user requirements, such as the security and robustness of the voice unlock technology should be taken into consideration.

UK patent application GB 2 346 045 A discloses a mobile terminal in which a spoken password is compared with a password that has previously been input via a keypad.

### SUMMARY OF THE INVENTION

The present invention has been made to address at least the problems and disadvantages described above and to provide at least the advantages described below. Accordingly, an aspect of the present invention provides a method for unlocking a terminal device and an apparatus, which may enhance ease of use and security of the unlocking operation in different scenarios.

In accordance with an aspect of the present invention, a method is provided for unlocking a terminal device. The method includes displaying an unlock interface including a plurality of nodes on a screen of the terminal device, wherein each of the plurality of nodes is displayed with prompt information; detecting voice input; performing voice recognition on the detected voice input; determining whether a result of the voice recognition corresponds to preset unlock nodes based on the prompt information displayed on each of the plurality of nodes; and when the result of the voice recognition corresponds to the preset unlock nodes, unlocking the terminal device, and displaying an interface behind the unlock interface.

In accordance with another aspect of the present invention, a terminal device is provided. The terminal device includes a voice recognition engine configured to detect voice input, perform voice recognition on the detected voice, and send a result of the voice recognition to an unlock module; the unlock module configured to generate an unlock interface comprising a plurality of nodes, wherein each of the plurality of nodes is identified with prompt information, and when the result of the voice recognition corresponds to preset unlock nodes based on the prompt information for each of the plurality of nodes to unlock the terminal device, and to generate an interface behind the unlock interface; and a screen to display the generated unlock interface including the plurality of nodes and the associated prompt information, to display a microphone icon when the voice recognition engine is triggered to start; and to display the interface behind the unlock interface when the terminal device is unlocked.

### BRIEF DESCRIPTION OF THE DRAWINGS

The above and other aspects, features and advantages of embodiments of the present invention will be more apparent from the following detailed description taken in conjunction with the accompanying drawings, in which:
FIG. 1 is a flowchart illustrating a method for unlocking a terminal device according to an embodiment of the present invention;
FIG. 2 is a flowchart illustrating a method of setting a voice-controlled slide-to-unlock setting of a terminal device and a method of controlling a slide-to-unlock setting via voice-recognition according to an embodiment of the present invention;
FIG. 3 is a schematic diagram illustrating a voice-controlled slide-to-unlock setting interface according to an embodiment of the present invention;
FIG. 4 is a schematic diagram illustrating a background picture setting interface according to an embodiment of the present invention;
FIG. 5 is a schematic diagram illustrating a node prompt setting interface according to an embodiment of the present invention;
FIG. 6 is a schematic diagram illustrating a slide-to-unlock path setting interface according to an embodiment of the present invention;
FIG. 7 is a schematic diagram illustrating a common function selection setting interface displayed after the terminal device is unlocked according to an embodiment of the present invention;
FIG. 8 is a schematic diagram illustrating a Sudoku voice-controlled slide-to-unlock interface adopting numeric prompts according to an embodiment of the present invention;
FIG. 9 is a schematic diagram illustrating a function selection interface after the terminal device is unlocked according to an embodiment of the present invention; and
FIG. 10 is a block diagram illustrating the structure of a terminal device according to an embodiment of the present invention.

### DETAILED DESCRIPTION OF EMBODIMENTS OF THE INVENTION

The present invention is further described in detail hereinafter with reference to the accompanying drawings to make the objective, technical solution and merits thereof more apparent.

In order to solve the problems in the conventional method, the present invention provides a voice recognition assisted slide-to-unlock scheme. Based on the conventional touch screen slide-to-unlock solution, the present invention takes the voice recognition technology as an auxiliary unlocking solution. When an unlocking interface of the intelligent terminal device is displayed, the unlocking interface, including several nodes, is displayed according to a preset scheme, and voice input of the user is detected simultaneously. If the user unlocks the intelligent terminal device in a touch and slide manner, the intelligent terminal device is unlocked according to the touch and slide manner. If the user unlocks the intelligent terminal device using the voice, the user needs to speak out corresponding unlocking nodes based on prompt information displayed on an unlock figure. The terminal device detects the voice input of the user and determines nodes corresponding to the voice, to achieve the object of unlocking the terminal device without touching the touch screen. The voice of the user is detected using a voice recognition engine.

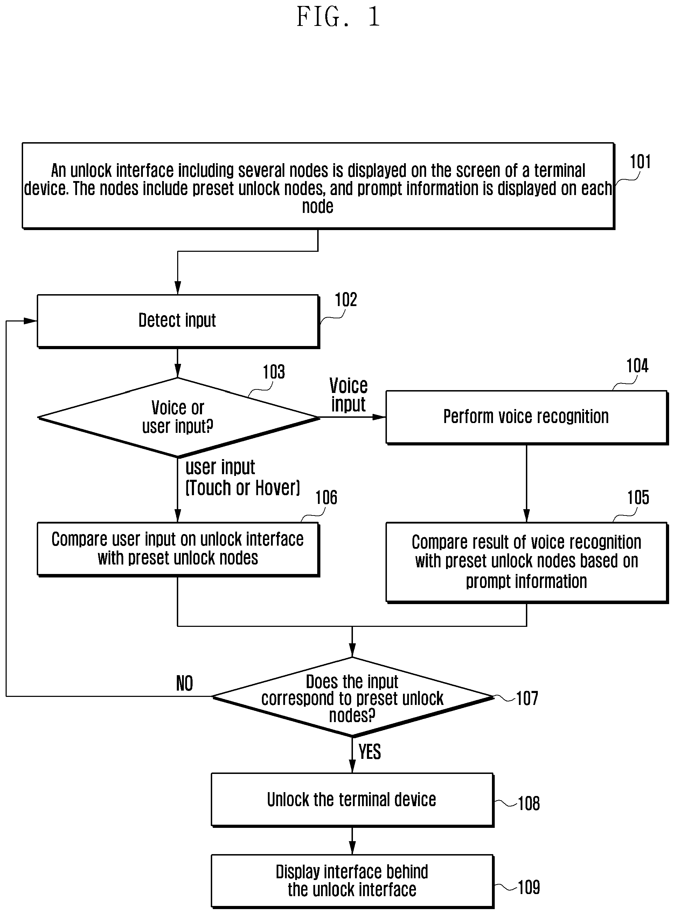

FIG. 1 is flowchart illustrating a method for unlocking a terminal device according to an embodiment of the present invention.

Referring to FIG. 1, in step 101, an unlock interface including several nodes is displayed on the screen of a terminal device. The nodes include preset unlock nodes, and prompt information is displayed on each node.

In step 102, input is detected. In step 103, it is determined whether the input is voice input. If the detected input is voice input, then in step 104 voice recognition is performed on the detected voice input. In step 105, the nodes corresponding to the result of the voice recognition is compared to the preset lock nodes based on the prompt information displayed on each node. In step 107, it is determined whether the result of the voice recognition corresponds to the preset unlock nodes based on the prompt information displayed on each node. If they do correspond, then in step 108, the terminal device is unlocked and in step 109, an interface behind the unlock interface is displayed. If they do not correspond, the process returns to step 102 to detect input.

Alternatively, if the input of the user on the unlock interface is detected in step 103, then in step 106, the nodes corresponding to the input of the user on the unlock interface is compared to the preset lock nodes. In step 107, it is determined whether the input of the user corresponds to the preset unlock nodes. If they do correspond, then in step 108, the terminal device is unlocked and in step 109, an interface behind the unlock interface is displayed. If they do not correspond, the process returns to step 102 to detect input. Here, the input of the user includes touching input and hovering input. In addition, the manner of the input may include input made by the user using a finger or a touch pen, or the input made by the user's eyeballs. For instance, the node selected by the user may be determined via collecting a point focused by the eyeballs of the user on the unlock interface.

Several embodiments of the present invention are provided for determining whether the result of the voice recognition corresponds to the preset unlock nodes in step 104 to 107.

In accordance with a first embodiment of the present invention, nodes corresponding to the result of the voice recognition are determined based on the prompt information displayed on each node. Then, it is determined whether the determined nodes correspond to the preset unlock nodes. The corresponding method may be a one-to-one relationship in the order of the nodes. In the alternative, the order of the nodes may not be considered, as long as the aggregation of the nodes corresponding to the result of the voice recognition is the same as the aggregation of the unlock nodes.

In accordance with a second embodiment of the present invention, nodes corresponding to the result of the voice recognition are determined based on the prompt information displayed on each node, a corresponding path is obtained according to the determined nodes, and a determination is made as to whether the path matches with an unlock path corresponding to the preset unlock nodes.

In accordance with a third embodiment of the present invention, prompt information corresponding to the unlock nodes is determined based on the prompt information displayed on each node. Then, it is determined whether the determined prompt information corresponds to the result of the voice recognition. The corresponding method may be a one-to-one relationship in the order of the nodes. In the alternative, the order of the nodes may not be considered, as long as the aggregate of prompt information corresponding to the result of the voice recognition is the same as the aggregate of prompt information for the unlock nodes.

In accordance with a fourth embodiment of the present invention, prompt information combination corresponding to an unlock path corresponding to unlock nodes is determined based on the prompt information displayed on each node. Then, it is determined whether the determined prompt information combination corresponds to the result of the voice recognition. The corresponding method may be a one-to-one relationship in the order of the nodes. In the alternative, the order of the nodes may not be considered, as long as the prompt information combination corresponding to the result of the voice recognition is the same as the prompt information combination of the unlock nodes.

With the above technical scheme provided by the various embodiments of the present invention, in some scenarios in which it is inconvenient to use the touch screen sliding operation, the user may unlock the intelligent terminal device via the function of voice unlock. With the complementary touch screen slide-to-unlock technology and the voice unlock technology, the ease of use of the unlocking and the security of the user information is taken into consideration, which improves the user experience.

In step 109, the interface behind the unlock interface may include preset icons of function options or applications, and each of the preset icons is displayed with prompt information on or around the icon. After displaying the interface behind the unlock interface including the preset icons, a voice input is detected. A voice recognition on the detected voice input is performed. An icon of a function option or an application corresponding to the result of the voice recognition is determined based on the prompt information displayed on or around the icons of the function options or applications. The corresponding function or application is executed.

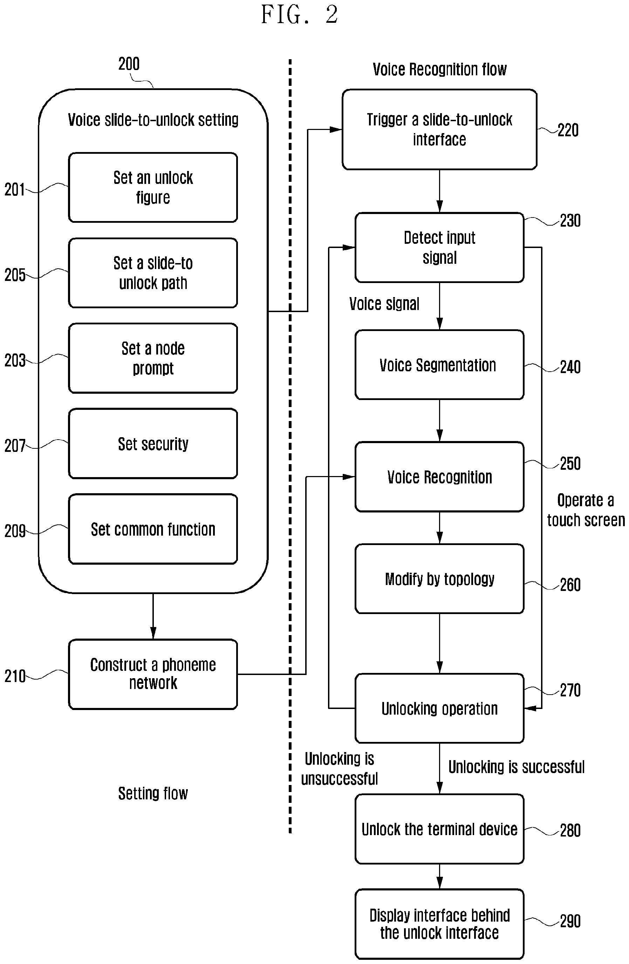

FIG. 2 is a flowchart illustrating a method of setting a voice-controlled slide-to-unlock setting of a terminal device and a method of controlling a slide-to-unlock setting via voice-recognition according to an embodiment of the present invention. In practice, the present invention includes two flows: a settings flow and voice recognition flow. Referring to FIG. 2, in the setting flow, the user may set relevant functions relating to the unlocking operation via the setting function. According to an embodiment of the present invention, in step 200 a voice slide-to-unlock setting is provided. Through the voice slide-to-unlock setting 200, the user may set at least one of an unlock figure 201, a slide-to-unlock path 205, a node prompt 203, various security settings 207 and a common function 209. The security settings 207 includes setting whether to display a slide path corresponding to the voice on the screen when the voice unlock is performed, whether to display nodes corresponding to the result of the voice recognition on the screen, whether to distribute the node prompts randomly and whether to adjust the user's model parameters according to the requirements of security.

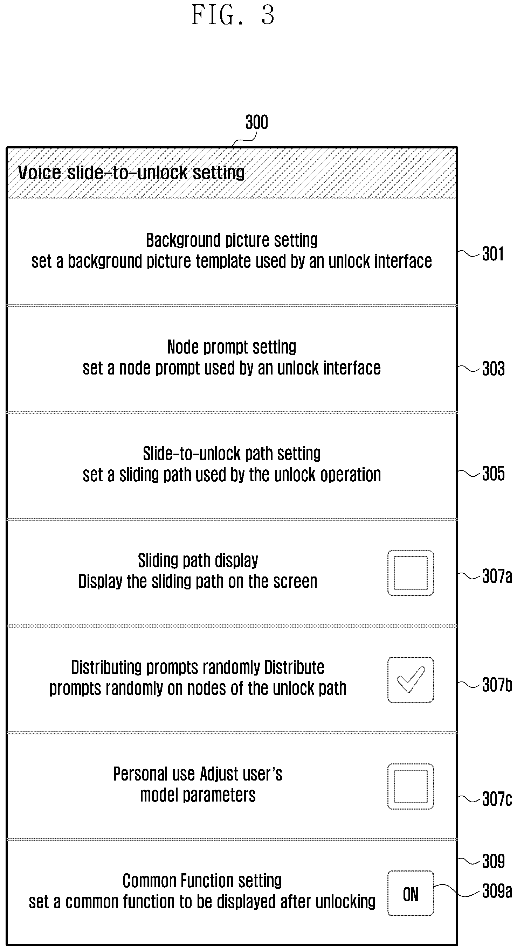

FIG. 3 is a schematic diagram illustrating a voice-controlled slide-to-unlock setting interface according to an embodiment of the present invention.

Referring to FIG. 3, the voice-controlled slide-to-unlock setting interface 300 provides the user with an interface for accessing the various setting functions of the voice slide-to-unlock setting 200 of FIG. 2. The slide-to-unlock setting interface 300 includes at least one of a background picture setting 301, a node prompt setting 303, a slide-to-unlock path setting 305, a sliding path display checkbox 307a, a distributing prompts randomly checkbox 307b, a personal use checkbox 307c and common function setting 309.

According to an embodiment of the present invention, the user may set an unlock figure 201 using the background picture setting 301 of the slide-to-unlock setting interface 300. The background picture setting 301 allows the user to select, from various background picture templates, a background picture to be used by the unlock interface.

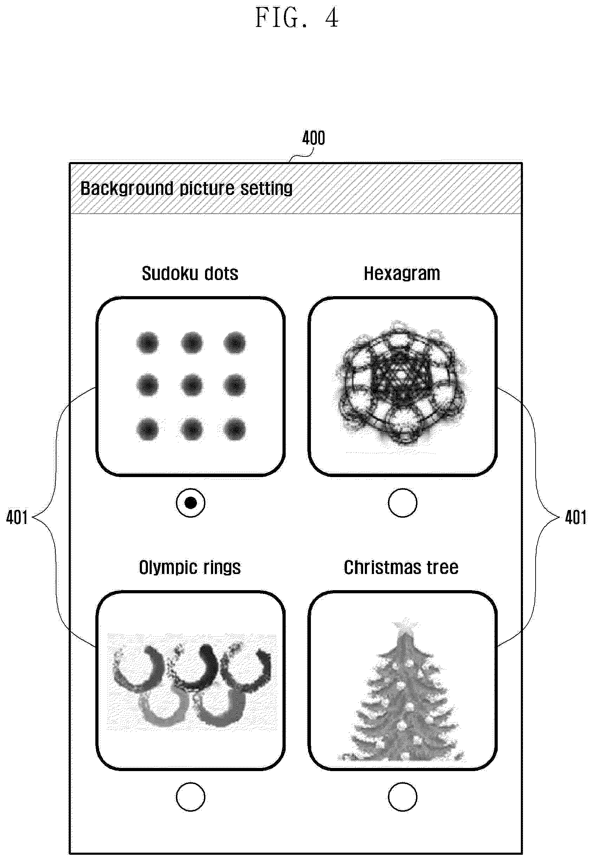

FIG. 4 is a schematic diagram illustrating a background picture setting interface according to an embodiment of the present invention. Referring to FIG. 4, the background picture setting interface 400 shows several common background pictures 401 from various background picture templates. By way of example, the following background pictures 401 are shown: Sudoku dots, a hexagram, Olympic rings, and a Christmas tree. The user may select the background picture 401 to be displayed as the background picture of the unlock interface. The selected background picture is the unlock picture. As shown in FIG. 4, the picture of Sudoku dots may be selected as the unlock picture.

When the user activates the unlock interface, the unlock picture selected by the user in the background picture setting interface 400 is displayed. If an unlock path is set for performing the unlocking operation, the unlock picture may be any picture in which the path can be planned; otherwise, the unlock picture displays the nodes and prompt information of the nodes (i.e., the prompts). The nodes of the path are set based on the unlock picture, and the prompts of the nodes may be freely used together with the set nodes of the path. Similar to an ordinary lattice slide-to-unlock where only adjacent nodes may be connected to create an unlock path, since the unlocking operation of the present invention is performed based on the unlock path, and since not all the nodes are connected with each other, not every combination of nodes will create a valid path. Node connectivity (and valid unlock paths) in the present invention is determined by the topology of the unlock picture. Additionally, the connectivity of the nodes provides information of language models for the voice recognition. Results containing nodes which are disconnected based on the topology of the unlock picture are considered to be false results and are removed from the candidate recognition results obtained by the voice recognition engine

Referring back to FIGs. 2 and 3, according to an embodiment of the present invention, the user may set a node prompt 203 using the node prompt setting 303 of the slide-to-unlock setting interface 300. The node prompt setting 303 allows the user to set the prompt information to be displayed on each node.

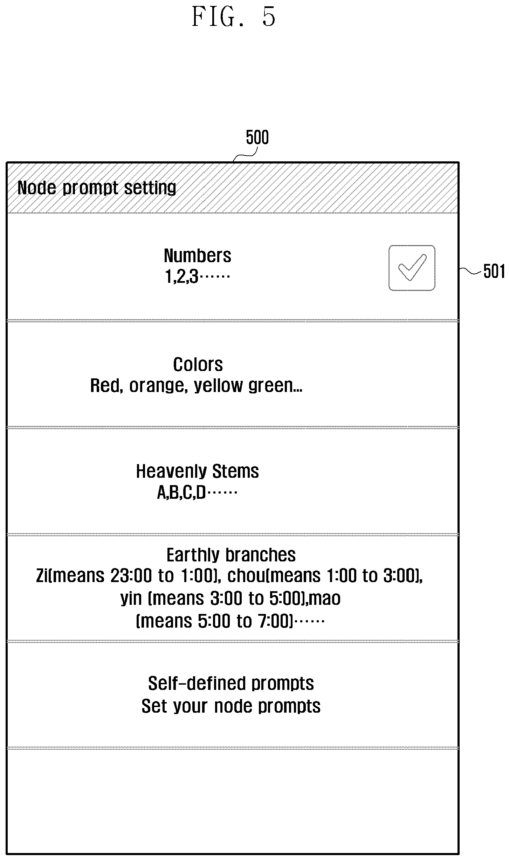

FIG. 5 is a schematic diagram illustrating a node prompt setting interface according to an embodiment of the present invention. Referring to FIG. 5, the node prompt setting interface 500 provides several default node prompt schemes, such as numbers, letters, colors, and other commonly-used combination concepts. The node prompt scheme may be designed according to user's requirements. The corresponding pronunciation of these prompts may be designated. Additionally, a single prompt may be associated with multiple pronunciations. The pronunciation of the prompt may be obtained via a grapheme-to-phoneme conversion module. After obtaining the pronunciation information corresponding to each prompt, a phoneme network used by the voice recognition is constructed as shown in step 210 of FIG. 2. The user selects the node prompt scheme to be displayed in the unlock interface. As shown in FIG. 5, numbers 501 are selected as the prompts or the prompt information of the nodes.

Referring back to FIGs. 2 and 3, according to an embodiment of the present invention, the user may set a slide-to-unlock path 205 using the slide-to-unlock path setting 305 of the slide-to-unlock setting interface 300. The slide-to-unlock path setting 305 allows the user to set a sliding path used by the unlock operation to unlock the terminal device.

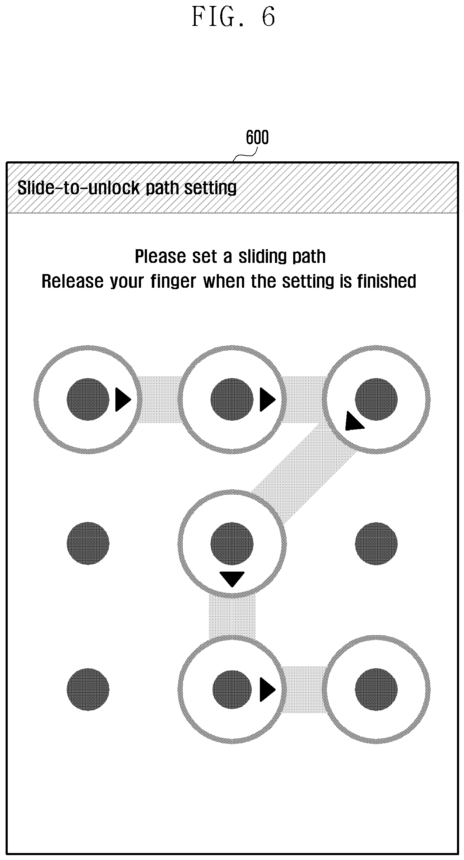

FIG. 6 is a schematic diagram illustrating a slide-to-unlock path setting interface according to an embodiment of the present invention. Referring to FIG. 6, the slide-to-unlock path setting interface 600 displays the background picture including a plurality of nodes. As shown in FIG. 6, the picture of the Sudoku dots which was selected by the user as the background picture is displayed. A user may draw the unlock path on the displayed picture of the Sudoku dots. At least one of the nodes included in the unlock path may be set as unlock nodes.

As for the scheme in which the unlocking is performed without the unlock path, unlock nodes may be set. When the unlocking operation is performed, it is determined whether the result of the voice recognition corresponds to the preset unlock nodes according to the methods described in the above embodiments of the present invention.

Referring back to FIGs. 2 and 3, according to an embodiment of the present invention, the user may set various security settings 207 using the sliding path display checkbox 307a, the distributing node prompts randomly checkbox 307b and the personal use checkbox 307c.

As shown in FIG. 3, the distributing node prompts randomly checkbox 307b is checked, while the sliding path display checkbox 307a is not checked. As a result, when the unlock interface is triggered, the number prompts may be randomly distributed on each node of the picture of the Sudoku dots, and the slide path of the voice unlock is not displayed on the screen.

If the personal use checkbox 307c is checked, the current model parameters may be modified via a previous unlock voice of the user. Therefore, using an acoustic model used by the voice recognition, the voice of an exclusive user is more likely to be recognized, and a recognition accuracy of other users is reduced. This may partially prevent others from obtaining unauthorized access to the terminal device.

Referring back to FIGs. 2 and 3, according to an embodiment of the present invention, the user may set a common function 209 using the common function setting 309 of the slide-to-unlock setting interface 300. The common function setting 309 allows the user to set the common function (or application) to be displayed after unlocking the terminal device. The common function setting 309 includes an ON/OFF menu 309a. The user may select whether display of a function selection interface which is displayed after the terminal device is unlocked. Referring to FIG. 3, the ON/OFF menu 309a is toggle type. Type of the ON/OFF menu 309a, however, is limited. For example, the ON/OFF menu 309a may be a slide type, a button type, checkbox type, etc.

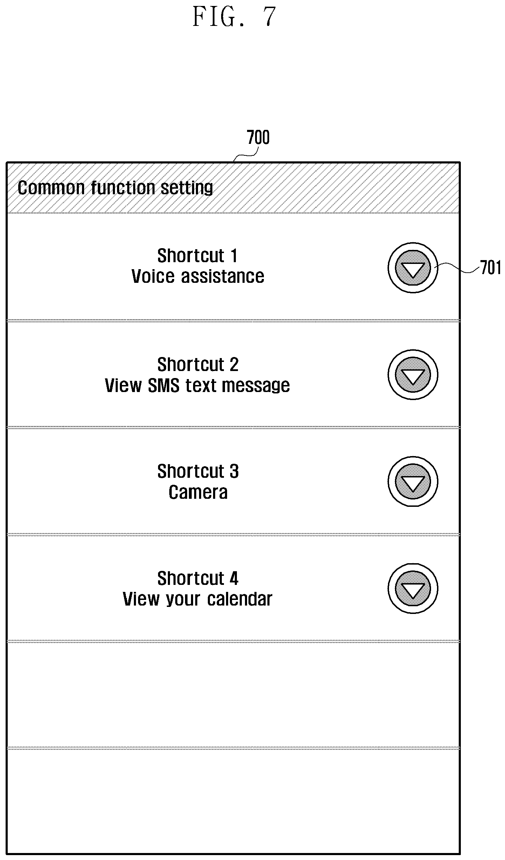

FIG. 7 is a schematic diagram illustrating a common function setting interface displayed after the terminal device is unlocked according to an embodiment of the present invention.

Referring to FIG. 7, the common function setting interface 700 provides a plurality of shortcut. Each of the plurality of shortcut may be set a common function or application. The user may change the set common function (or common application) to each of shortcuts via a selection menu 701. For example, if the selection menu 701 of a shortcut 1 is activated (e.g. touched), a list including a plurality of functions(or applications) is displayed. If a function is selected from the list, the selected function is set to the shortcut 1.

If the unlocking operation succeeds, the common function options (or common applications) set by the user are displayed on the interface behind the unlock interface. Additionally, corresponding prompt information is displayed on or around the icons of the common function options (or common applications) for the user to choose. The corresponding prompt information may use the node prompt scheme set for the unlock interface, or may set separately. Such prompt information may enhance the ease of use.

The technical scheme of the various embodiments of the present invention may apply to not only unlocking the terminal device when the terminal device is on standby, but also may also apply to unlocking a file before the file is opened, or to unlocking an application before an application is started.

Different interfaces behind the unlock interface may be provided according to the various scenarios. For instance, if the technical scheme applies to unlocking the terminal device when the terminal device is on standby, when the unlocking operation succeeds and the unlock interface is opened, the icons of the common applications set by the user are displayed on the interface behind the unlock interface. On the other hand, if the technical scheme applies to unlocking an application before the application is started, when the unlocking operation succeeds and the unlock interface is opened, the common function options of the unlocked application are displayed on the interface behind the unlock interface.

Referring back to FIG. 2, the recognition flow details the process of unlocking the terminal device.

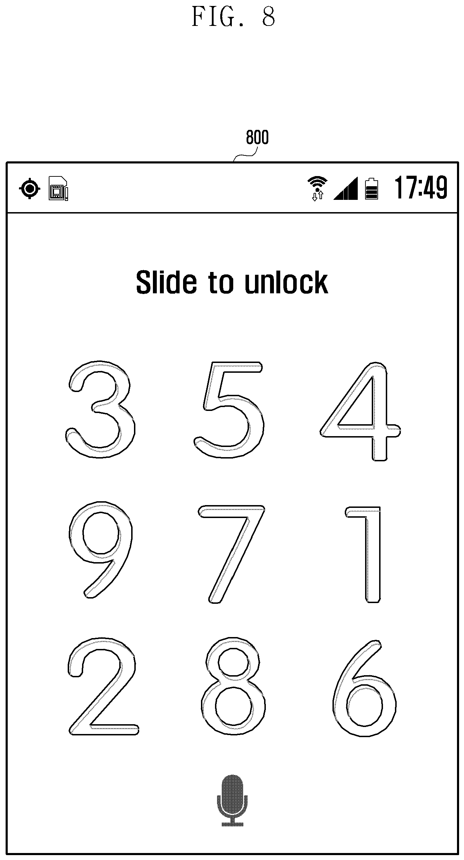

In step 220, when the unlock function is triggered, the slide-to-unlock interface 800 (as shown in FIG. 8) is displayed on the screen of the terminal device. An unlock figure is displayed on the unlock interface, and prompt information is displayed on each node of the unlock figure. At the same time, a voice recognition engine starts, and an acoustic model and a phoneme network are loaded In step 230, an input signal is detected. It is determined whether the detected input signal is a signal operating the touch screen or if the detected input signal is a voice signal. If it is detected that the user performs the touch screen sliding operation, then it is determined whether the unlocking operation is successful in step 270. For example, it is determined whether the path drawn by the user is correct. If the path is correct, the terminal device is unlocked in step 280 and the interface behind the unlock interface is displayed in step 290. If the path is incorrect, the process returns to step 230 and waits to detect an input signal.

When the voice input is detected, an audio clip of a single word is obtained first via voice segmentation, in step 240. In step 250, acoustic features are obtained, real-time voice recognition is performed on each single word using the voice recognition engine, and one or multiple candidate recognition results are respectively obtained corresponding to each single word. Next, in step 260, a path connecting nodes corresponding to the voice recognition is modified by the topology of the unlock

A brief description of the node connectivity topology information of the unlock figure is given here. As mentioned above, the unlock figure consists of several nodes. Only those nodes adjacent to one another will connect, thus not all nodes may connect with each other. Taking the picture of the Sudoku dots shown in FIG. 8, for example, the node with the prompt "3" connects with nodes with prompts "5", "7" and "9", but does not connect with other nodes. The connectivity information of all the nodes in the unlock figure forms the node connectivity topology information of the unlock figure.

In step 270, it is determined whether the unlocking operation is successful. If the unlocking operation is successful, then the terminal device is unlocked in step 280 and the interface behind the unlock interface in displayed in step 290. If the unlocking operation is unsuccessful, then the process returns to step 230 and waits to detect an input signal. Whether the unlocking operation is successful is determined based on the four embodiments of the present invention described above, and by adopting four corresponding methods.

In the first method: Nodes corresponding to the result of the voice recognition (i.e., the candidate recognition result of each single word) are determined according to prompt information displayed on each node. Then, it is determined whether the determined node corresponding to each single word corresponds to each of the preset unlock nodes. If yes, the unlocking operation succeeds. The corresponding method may be a one-to-one relationship between the determined node corresponding to each single word and each of the preset unlock nodes. In the alternative, the determined node corresponding to each single word corresponds to each of the preset unlock nodes, and the order of the voice input of the determined nodes corresponds to an unlock order of the preset unlock nodes.

In the second method: Corresponding to the unlocking scheme using the unlock path, as for the single word with multiple candidate recognition results, the above recognition results are validated based on the node connectivity topology information of the unlock figure and the prompt information of each node, the best node corresponding to each single word is returned. As for the single word with one candidate recognition result, the node corresponding to the candidate recognition result is taken as the node corresponding to the single word according to the prompt information of each node. Last, a corresponding path is obtained according to the node corresponding to each single word, and the path is matched with the unlock path corresponding to the preset unlock nodes, to finish the unlocking operation.

In the third method: The prompt information of the unlock nodes is determined according to the prompt information displayed on each node. It is determined whether the determined prompt information corresponds to the result of the voice recognition (i.e., the candidate recognition result of each single word). If yes, the unlocking operation succeeds. The corresponding method may be a one-to-one relationship between the determined nodes and the preset unlock nodes. In the alternative, the determined nodes correspond to the preset unlock nodes, and the order of the voice input of the determined nodes corresponds to the unlock order of the preset unlock nodes.

In the fourth method: An prompt information combination corresponding to the unlock path corresponding to the unlock nodes is determined according to the prompt information displayed on each node. It is determined whether the determined prompt information combination corresponds to the result of the voice recognition (i.e. the candidate recognition result of each single word). If yes, the unlocking operation succeeds. The corresponding method may be a one-to-one relationship between the determined prompt information and the result of the voice recognition. In the alternative, the determined information corresponds to the result of the voice recognition, and the prompt information which is determined according to the unlock order of the unlock nodes corresponds to the result of the voice recognition.

The above four situations respectively correspond to the above four embodiments of the present invention.

FIG. 8 is a schematic diagram illustrating a Sudoku voice-controlled slide-to-unlock interface adopting numeric prompts according to an embodiment of the present invention.

Referring to FIG. 8, the unlock scheme of the terminal device of the present invention is described via an unlock example with reference to the accompanying figure.

When the unlock process is triggered via an operation, the corresponding unlock interface is displayed on the screen of the terminal device according to the previously set unlock function options. The set numeric prompts are randomly distributed on each node if the user checked the distributing prompts randomly checkbox 309. As shown in FIG. 8, a microphone icon at the bottom of the screen indicates that the voice recognition engine has started, and waits for input of voice signals.

Then, the user may choose to use the voice-controlled method to unlock the device, and speak out a numeric string for unlocking the device according to the preset unlock path. Using the example shown in FIG. 6, the numeric string should be 3-5-4-7-8-6. The terminal device starts to segment the received voice signals, extract the acoustic features, obtain the recognition result, and initiate the sliding operation simultaneously.

After the sliding operation is finished, the terminal device detects whether the input path matches with the preset unlock path. If it does, the terminal device is unlocked and voice recognition engine is closed; otherwise, the user is informed that the unlocking operation fails. The terminal device continues to wait for an additional input signal until the screen is closed.

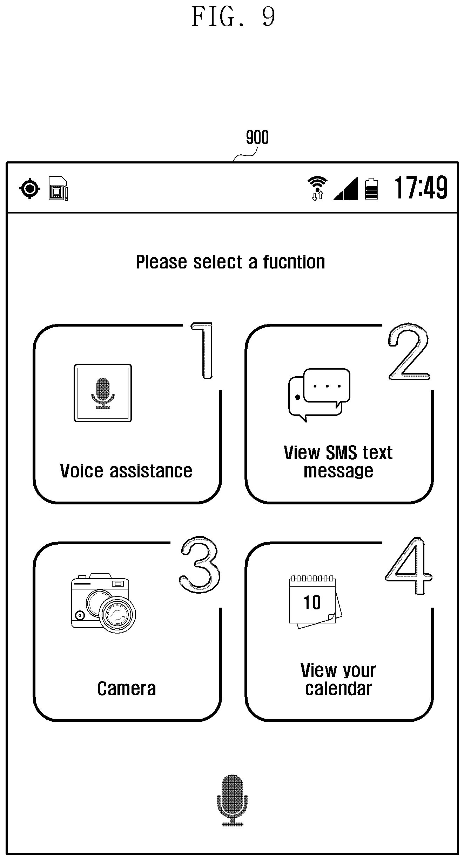

FIG. 9 is a schematic diagram illustrating a function selection interface after the terminal device is unlocked according to an embodiment of the present invention.

Referring to FIG. 9, after the terminal device is unlocked, the preset common function options interface 900 may be displayed. The user may speak out a corresponding option number of a common function, and the corresponding function is executed. For example, the user speaks out a number "3", a camera function corresponding to the prompt information "3" is executed.

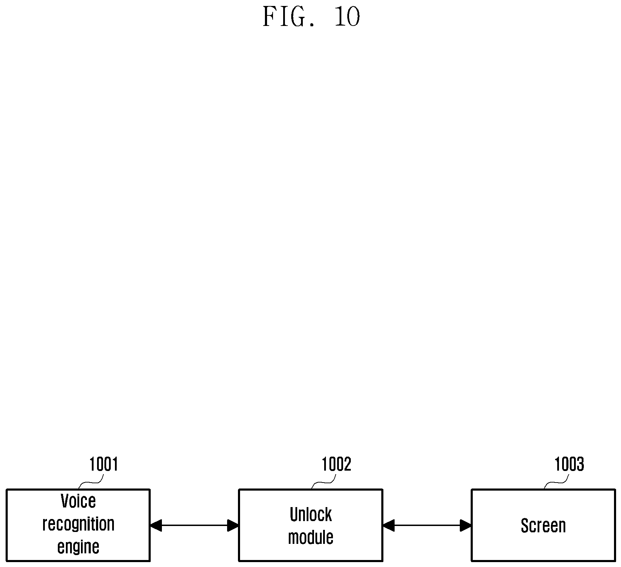

FIG. 10 is a block diagram illustrating the structure of a terminal device according to an embodiment of the present invention.

Referring to FIG. 10, according to the above described embodiments of the present invention a terminal device is provided. The terminal device includes an unlock module 1001, a voice recognition engine 1002 and a screen 1003.

The unlock module 1002 is configured to generate an unlock interface including several nodes, display the generated unlock interface on the screen 1003 of the terminal device, and display a microphone icon on the screen 1003 of the terminal device when the voice recognition engine 1001 is triggered to start.

The voice recognition engine 1001 is configured to detect voice input, perform voice recognition on voice, and send a result of the voice recognition to the unlock module 1002.

The unlock module 1002 is further configured to determine whether the result of the voice recognition corresponds to the preset unlock nodes based on prompt information displayed on each node, unlock the device when they do correspond and display an interface behind the unlock interface on the screen 1003 after the device is unlocked.

According to an embodiment of the present invention, the unlock module 1002 is further configured to detect touch or hovering input of the user on the unlock interface, determine whether nodes corresponding to the input correspond to the preset unlock nodes based on the prompt information displayed on each node after input is complete, and, if they do correspond, display the interface behind the unlock interface on the screen 1003.

According to an embodiment of the present invention, the unlock module 1002 is further configured to determine nodes corresponding to the result of the voice recognition based on the prompt information displayed on each node, and to determine whether the nodes corresponding to the result of the voice recognition corresponds to the preset unlock nodes through determining whether the determined nodes correspond to the preset unlock nodes; or the unlock module 1002 is further configured to determine the nodes corresponding to the result of the voice recognition based on the prompt information displayed on each node, obtain a corresponding path according to the determined nodes, and determine whether the result of the voice recognition corresponds to the preset unlock nodes through determining whether the path matches with an unlock path corresponding to the preset unlock nodes; or the unlock module 1002 is further configured to determine prompt information corresponding to the unlock nodes based on the prompt information displayed on the each node, and determine whether the result of the voice recognition corresponds to the preset unlock nodes through determining whether the determined prompt information corresponds to the result of the voice recognition; or the unlock module 1002 is further configured to determine a prompt information combination corresponding to the unlock path corresponding to the unlock nodes according to the information displayed on each node, and determine whether the result of the voice recognition corresponds to the preset unlock nodes through determining whether the determined prompt information combination corresponds to the result of the voice recognition.

According to an embodiment of the present invention, the voice recognition engine 1001 is further configured to perform voice recognition on each word of the voice input, to obtain one or multiple candidate recognition results corresponding to each word, to determine, for a word with multiple candidate recognition results, the best node corresponding to the single word according to node connectivity information of the unlock interface and the prompt information displayed on each node, to determine, for a word with one candidate recognition result, a node corresponding to the word with one candidate recognition result based on the prompt information displayed on each node, and to connect each node corresponding to the each word to obtain the corresponding path.

According to another embodiment of the present invention, the unlock module 1002 is further configured to determine whether there is a one-to-one relationship between the determined nodes and the preset unlock nodes; or to determine whether there is a one-to-one relationship between the determined nodes and the preset unlock nodes, and to determine whether an order of voice input corresponding to the determined nodes corresponds to an unlock order of the preset unlock nodes.

According to another embodiment of the present invention, the unlock module 1002 is further configured to determine whether there is a one-to-one relationship between the determined prompt information and the result of the voice recognition; or to determine whether there is a one-to-one relationship between the determined prompt information and the result of the voice recognition and to determine whether prompt information determined according to an unlock order of the unlock nodes corresponds to the result of the voice recognition.

According to another embodiment of the present invention, the unlock module 1002 is further configured to randomly access prompt information and display the prompt information on each node when the unlock interface is generated, and to control whether to display the path obtained according to the result of the voice recognition on the unlock interface.

According to another embodiment of the present invention, to further enhance security, the unlock module may be further configured such that the prompt of each node is randomly distributed on the unlock interface each time the unlocking operation is performed. Additionally, during the unlocking process, the corresponding sliding path corresponding to the voice input is not displayed. In this way, the sliding path information encrypted by the voice will not be disclosed. Along with the change of the prompt, the voice does not carry decryption information. Even if the unlock voice of the user is accurately recorded, the unlock voice cannot be used repeatedly. The user may choose to use voice modification model parameters of the unlocking operation. On the one hand, it can be guaranteed that the unlock voice of the user may be recognized correctly. As a result, unauthorized use can be effectively prevented. Therefore, multiple encryption is implemented with a simple method, which greatly enhances the security of the terminal device. In addition, the methods of the present invention are not limited to the unlocking operation of the intelligent terminal device, instead, these methods can be used as an unlocking scheme in general security and defense systems.

The present invention provides the user, in scenarios where it is inconvenient to use the touch screen sliding operation to unlock an intelligent terminal devices, with the ability to unlock the device via a voice unlock function or the touch screen slide-to-unlock function. This combined functionality enhances the user's experience by providing an easy and convenient to use unlocking operation and also ensures the security of the terminal device and user information.

The foregoing only describes embodiments of the present invention. The scope of the present invention, however, is not limited to the above description. Any change or substitution, easily occurring to those skilled in the art, should be covered by the scope of the present invention, as defined by the appended claims.

## Claims

1. A method for unlocking a terminal device, the method comprising:
displaying a lock interface comprising a plurality of nodes on a screen of the terminal device, wherein each of the plurality of nodes is displayed with prompt information identifying each node ;
detecting voice input;
performing voice recognition on the detected voice input by determining nodes identified by the voice input;
determining whether a result of the voice recognition corresponds to preset unlock nodes based on the prompt information displayed on each of the plurality of nodes; and
if the result of the voice recognition corresponds to the preset unlock nodes, unlocking the terminal device, and
displaying an unlock interface behind the lock interface,
wherein determining whether the result of the voice recognition corresponds to the preset unlock nodes comprises:
determining the nodes corresponding to the result of the voice recognition based on the prompt information displayed on each of the plurality of nodes,
obtaining a corresponding path based on the determined nodes, and
determining whether the path matches with an unlock path corresponding to the preset unlock nodes.

2. The unlocking method of claim 1, further comprising:
detecting input on the lock interface, wherein the input comprises the selection of at least one of the plurality of nodes and includes touch or hovering input;
determining whether the selected nodes correspond to the preset unlock nodes; and
when the selected nodes correspond to the preset unlock nodes,
unlocking the terminal device, and
displaying the unlock interface behind the lock interface.

3. The unlocking method of claim 1, wherein determining whether the result of the voice recognition corresponds to the preset unlock nodes comprises one of:
determining nodes corresponding to the result of the voice recognition based on the prompt information displayed on each of the plurality of nodes, and determining whether the determined nodes correspond to the preset unlock nodes;
determining prompt information corresponding to the preset unlock nodes based on the prompt information displayed on each of the plurality of nodes, and determining whether the determined prompt information corresponds to the result of the voice recognition; and
determining a prompt information combination corresponding to the unlock path corresponding to the preset unlock nodes based on the prompt information displayed on each of the plurality of nodes, and determining whether the determined prompt information combination corresponds to the result of the voice recognition.

4. The method of claim 1, wherein determining the nodes corresponding to the result of the voice recognition based on the prompt information displayed on each of the plurality of nodes, and obtaining the corresponding path based on the determined nodes comprises:
performing voice recognition on each word in the detected voice input;
obtaining one or multiple candidate recognition results corresponding to each word;
determining, for a word with multiple candidate recognition results, a best node corresponding to the word based on node connectivity information of the lock interface and the prompt information displayed on each of the plurality of nodes;
determining, for a word with one candidate recognition result, a node corresponding to the word based on the prompt information displayed on each of the plurality of nodes; and
connecting each of the determined nodes corresponding to the each word to obtain the corresponding path.

5. The method of claim 3, wherein determining whether the determined nodes correspond to the preset unlock nodes comprises
determining whether there is a one-to-one relationship between the determined nodes and the preset unlock nodes; or
determining whether there is a one-to-one relationship between the determined nodes and the preset unlock nodes, and determining whether an order of voice input corresponding to the determined nodes corresponds to an unlock order of the preset unlock nodes.

6. The method of claim 3, wherein determining whether the determined prompt information corresponds to the result of the voice recognition comprises:
determining whether there is a one-to-one relationship between the determined prompt information and the result of the voice recognition, or
determining whether there is a one-to-one relationship between the determined prompt information and the result of the voice recognition, and determining whether prompt information determined according to an unlock order of the unlock nodes corresponds to the result of the voice recognition.

7. The method of claims 3 to 6, further comprising at least one of:
displaying the obtained path or not displaying on the lock interface according to a security setting; and
distinguishably displaying the nodes corresponding to the result of the voice recognition on the lock interface with other nodes.

8. The method of claim 1 to 7, wherein the prompt information displayed on each of the plurality of nodes is randomly distributed.

9. The method of claim 1 to 8, further comprising:
after displaying the unlock interface behind the lock interface, wherein the unlock interface behind the lock interface includes preset icons of function options or applications, and each of the preset icons is displayed with prompt information on or around the icon,
detecting voice input,
performing voice recognition on the detected voice input,
determining an icon of a function option or an application corresponding to the result of the voice recognition based on the prompt information displayed on or around the icons of the function options or applications, and
executing the corresponding function or application.

10. A terminal device, comprising:
a voice recognition engine (1001) configured to detect voice input, perform voice recognition on the detected voice, and send a result of the voice recognition to an unlock module (1002);
the unlock module configured:
to generate a lock interface comprising a plurality of nodes, wherein each of the plurality of nodes is identified with prompt information, and
if the result of the voice recognition that determines nodes identified by the voice input corresponds to preset unlock nodes based on the prompt information for each of the plurality of nodes:
to unlock the terminal device, and
to generate an unlock interface behind the lock interface; and
a screen (1003) configured to display the generated lock interface including the plurality of nodes and the associated prompt information, to display a microphone icon when the voice recognition engine is triggered to start; and to display the unlock interface behind the lock interface when the terminal device is unlocked,
wherein the unlock module is further configured to:
determine the nodes corresponding to the result of the voice recognition based on the prompt information displayed on each of the plurality of nodes,
obtain a corresponding path based on the determined nodes, and
determine whether the path matches with an unlock path corresponding to the preset unlock nodes.

11. The terminal device of claim 10, wherein the unlock module (1002) is further configured to detect touch input on the lock interface, wherein the touch input comprises the selection of at least one of the plurality of nodes, to determine whether the selected nodes correspond to the preset unlock nodes, and when the selected nodes correspond to the present unlock nodes unlock the terminal device and display the unlock interface behind the lock interface on the screen (1003).

12. The terminal device of claim 10, wherein the unlock module (1002) is further configured to:
determine nodes corresponding to the result of the voice recognition based on the prompt information displayed on each of the plurality of nodes, and to determine whether the determined nodes corresponds to the preset unlock nodes;
determine prompt information corresponding to the preset unlock nodes based on the prompt information displayed on each of the plurality of nodes, and to determine whether the determined prompt information corresponds to the result of the voice recognition; or
determine a prompt information combination corresponding to the unlock path corresponding to the preset unlock nodes based on the prompt information displayed each of the plurality of nodes, and to determine whether the determined prompt information combination corresponds to the result of the voice recognition.

13. The terminal device of claim 10, wherein
the voice recognition engine (1001) is further configured to perform voice recognition on each word in the voice input, and to obtain one or multiple candidate recognition results corresponding to each word; and
the unlock module (1002) is further configured to determine, for a word with multiple candidate recognition results, a best node corresponding to the word based on node connectivity information of the lock interface and the prompt information displayed on each of the plurality of nodes, and to determine, for a single word with one candidate recognition result, a node corresponding to the word based on the prompt information displayed on each of the plurality of nodes, and to connect each of the determined nodes corresponding to the each word to obtain the corresponding path.

14. The terminal device of claim 12, wherein the unlock module (1002) is further configured to:
determine whether there is a one-to-one relationship between the determined nodes and the preset unlock nodes; or
determine whether there is a one-to-one relationship between the determined nodes and the preset unlock nodes, and to determine whether an order of voice input corresponding to the determined nodes corresponds to an unlock order of the preset unlock nodes.

15. The terminal device of claim 12, wherein the unlock module is further configured to:
determine whether there is a one-to-one relationship between the determined prompt information and the result of the voice recognition; or
determine whether there is a one-to-one relationship between the determined prompt information and the result of the voice recognition, and to determine whether prompt information determined according to an unlock order of the unlock nodes corresponds to the result of the voice recognition.

## Patentansprüche

1. Verfahren zum Entsperren eines Endgerätes, wobei das Verfahren Folgendes umfasst:
Anzeigen einer Sperrschnittstelle, die mehrere Knoten umfasst, auf einem Bildschirm des Endgerätes, wobei jeder der mehreren Knoten mit Hinweisinformationen angezeigt wird, die jeden Knoten identifizieren;
Erfassen von Spracheingabe;
Durchführen von Spracherkennung bei der erfassten Spracheingabe durch Ermitteln von Knoten, die durch die Spracheingabe identifiziert werden;
Ermitteln, ob ein Ergebnis der Spracherkennung voreingestellten Entsperrknoten entspricht, basierend auf den Hinweisinformationen, die bei jedem der mehreren Knoten angezeigt werden; und
wenn das Ergebnis der Spracherkennung den voreingestellten Entsperrknoten entspricht,
Entsperren des Endgerätes und
Anzeigen einer Entsperrschnittstelle hinter der Sperrschnittstelle,
wobei Ermitteln, ob das Ergebnis der Spracherkennung den voreingestellten Entsperrknoten entspricht, Folgendes umfasst:
Ermitteln der Knoten, die dem Ergebnis der Spracherkennung entsprechen, basierend auf den Hinweisinformationen, die bei jedem der mehreren Knoten angezeigt werden,
Erlangen eines entsprechenden Pfades basierend auf den ermittelten Knoten und
Ermitteln, ob der Pfad mit einem Entsperrpfad übereinstimmt, der den voreingestellten Entsperrknoten entspricht.

2. Entsperrverfahren nach Anspruch 1, das ferner Folgendes umfasst:
Erfassen von Eingabe auf der Sperrschnittstelle, wobei die Eingabe die Auswahl mindestens eines der mehreren Knoten umfasst und Berühr- oder Schwebeeingabe beinhaltet;
Ermitteln, ob die ausgewählten Knoten den voreingestellten Entsperrknoten entsprechen; und
wenn die ausgewählten Knoten den voreingestellten Entsperrknoten entsprechen,
Entsperren des Endgerätes und
Anzeigen der Entsperrschnittstelle hinter der Sperrschnittstelle.

3. Entsperrverfahren nach Anspruch 1, wobei Ermitteln, ob das Ergebnis der Spracherkennung den voreingestellten Entsperrknoten entspricht, eines von Folgendem umfasst:
Ermitteln von Knoten, die dem Ergebnis der Spracherkennung entsprechen, basierend auf den Hinweisinformationen, die bei jedem der mehreren Knoten angezeigt werden, und Ermitteln, ob die ermittelten Knoten den voreingestellten Entsperrknoten entsprechen;
Ermitteln von Hinweisinformationen, die den voreingestellten Entsperrknoten entsprechen, basierend auf den Hinweisinformationen, die bei jedem der mehreren Knoten angezeigt werden, und Ermitteln, ob die ermittelten Hinweisinformationen dem Ergebnis der Spracherkennung entsprechen; und
Ermitteln einer Hinweisinformationen-Kombination, die dem Entsperrpfad entspricht, der den voreingestellten Entsperrknoten entspricht, basierend auf den Hinweisinformationen, die bei jedem der mehreren Knoten angezeigt werden, und Ermitteln, ob die ermittelte Hinweisinformationen-Kombination dem Ergebnis der Spracherkennung entspricht.

4. Verfahren nach Anspruch 1, wobei Ermitteln der Knoten, die dem Ergebnis der Spracherkennung entsprechen, basierend auf den Hinweisinformationen, die bei jedem der mehreren Knoten angezeigt werden, und Erlangen des entsprechenden Pfades basierend auf den ermittelten Knoten Folgendes umfasst:
Durchführen von Spracherkennung bei jedem Wort in der erfassten Spracheingabe;
Erlangen eines oder mehrerer Kandidaten-Erkennungsergebnisse, die jedem Wort entsprechen;
für ein Wort mit mehreren Kandidaten-Erkennungsergebnissen Ermitteln eines besten Knotens, der dem Wort entspricht, basierend auf Knotenkonnektivitätsinformationen der Sperrschnittstelle und den Hinweisinformationen, die bei jedem der mehreren Knoten angezeigt werden;
für ein Wort mit einem Kandidaten-Erkennungsergebnis Ermitteln eines Knotens, der dem Wort entspricht, basierend auf den Hinweisinformationen, die bei jedem der mehreren Knoten angezeigt werden; und
Verbinden jedes der ermittelten Knoten, die dem jeweiligen Wort entsprechen, um den entsprechenden Pfad zu erlangen.

5. Verfahren nach Anspruch 3, wobei Ermitteln, ob die ermittelten Knoten den voreingestellten Entsperrknoten entsprechen, Folgendes umfasst:
Ermitteln, ob es eine Eins-zu-eins-Beziehung zwischen den ermittelten Knoten und den voreingestellten Entsperrknoten gibt; oder,
Ermitteln, ob es eine Eins-zu-eins-Beziehung zwischen den ermittelten Knoten und den voreingestellten Entsperrknoten gibt, und Ermitteln, ob eine Reihenfolge von Spracheingabe, die den ermittelten Knoten entspricht, einer Entsperrreihenfolge der voreingestellten Entsperrknoten entspricht.

6. Verfahren nach Anspruch 3, wobei Ermitteln, ob die ermittelten Hinweisinformationen dem Ergebnis der Spracherkennung entsprechen, Folgendes umfasst:
Ermitteln, ob es eine Eins-zu-eins-Beziehung zwischen den ermittelten Hinweisinformationen und dem Ergebnis der Spracherkennung gibt, oder
Ermitteln, ob es eine Eins-zu-eins-Beziehung zwischen den ermittelten Hinweisinformationen und dem Ergebnis der Spracherkennung gibt, und Ermitteln, ob Hinweisinformationen, die gemäß einer Entsperrreihenfolge der Entsperrknoten ermittelt werden, dem Ergebnis der Spracherkennung entsprechen.

7. Verfahren nach Anspruch 3 bis 6, das ferner mindestens eines von Folgendem umfasst:
Anzeigen oder Nicht-Anzeigen des erlangten Pfades auf der Sperrschnittstelle gemäß einer Sicherheitseinstellung und
unterscheidbares Anzeigen der Knoten, die dem Ergebnis der Spracherkennung entsprechen, auf der Sperrschnittstelle mit anderen Knoten.

8. Verfahren nach Anspruch 1 bis 7, wobei die Hinweisinformationen, die bei jedem der mehreren Knoten angezeigt werden, zufällig verteilt sind.

9. Verfahren nach Anspruch 1 bis 8, das ferner Folgendes umfasst:
nach Anzeigen der Entsperrschnittstelle hinter der Sperrschnittstelle, wobei die Entsperrschnittstelle hinter der Sperrschnittstelle voreingestellte Symbole von Funktionsoptionen oder Anwendungen beinhaltet und jedes der voreingestellten Symbole mit Hinweisinformationen auf dem oder um das Symbol herum angezeigt wird,
Erfassen von Spracheingabe,
Durchführen von Spracherkennung bei der erfassten Spracheingabe,
Ermitteln eines Symbols einer Funktionsoption oder einer Anwendung, die dem Ergebnis der Spracherkennung entspricht, basierend auf den Hinweisinformationen, die auf den Symbolen oder um die Symbole der Funktionsoptionen oder Anwendungen herum angezeigt werden, und
Ausführen der entsprechenden Funktion oder Anwendung.

10. Endgerät, das Folgendes umfasst:
eine Spracherkennungs-Engine (1001), die konfiguriert ist, Spracheingabe zu erfassen, Spracherkennung bei der erfassten Sprache durchzuführen und ein Ergebnis der Spracherkennung an ein Entsperrmodul (1002) zu senden;
wobei das Entsperrmodul konfiguriert ist,
eine Sperrschnittstelle zu erzeugen, die mehrere Knoten umfasst, wobei jeder der mehreren Knoten mit Hinweisinformationen identifiziert ist, und
wenn das Ergebnis der Spracherkennung, die basierend auf den Hinweisinformationen für jeden der mehreren Knoten Knoten ermittelt, die durch die Spracheingabe identifiziert sind, voreingestellten Entsperrknoten entspricht,
das Endgerät zu entsperren und
eine Entsperrschnittstelle hinter der Sperrschnittstelle zu erzeugen; und
einen Bildschirm (1003), der konfiguriert ist, die erzeugte Sperrschnittstelle anzuzeigen, die die mehreren Knoten und die zugeordneten Hinweisinformationen beinhaltet, ein Mikrofonsymbol anzuzeigen, wenn die Spracherkennungs-Engine ausgelöst wird, um zu starten; und die Entsperrschnittstelle hinter der Sperrschnittstelle anzuzeigen, wenn das Endgerät entsperrt ist,
wobei das Entsperrmodul ferner konfiguriert ist,
die Knoten, die dem Ergebnis der Spracherkennung entsprechen, basierend auf den Hinweisinformationen zu ermitteln, die bei jedem der mehreren Knoten angezeigt werden,
einen entsprechenden Pfad basierend auf den ermittelten Knoten zu erlangen und
zu ermitteln, ob der Pfad mit einem Entsperrpfad übereinstimmt, der den voreingestellten Entsperrknoten entspricht.

11. Endgerät nach Anspruch 10, wobei das Entsperrmodul (1002) ferner konfiguriert ist, Berühreingabe auf der Sperrschnittstelle zu erfassen, wobei die Berühreingabe die Auswahl mindestens eines der mehreren Knoten umfasst, um zu ermitteln, ob die ausgewählten Knoten den voreingestellten Entsperrknoten entsprechen, und wenn die ausgewählten Knoten den voreingestellten Entsperrknoten entsprechen, das Endgerät zu entsperren und die Entsperrschnittstelle hinter der Sperrschnittstelle auf dem Bildschirm (1003) anzuzeigen.

12. Endgerät nach Anspruch 10, wobei das Entsperrmodul (1002) ferner konfiguriert ist,
Knoten, die dem Ergebnis der Spracherkennung entsprechen, basierend auf den Hinweisinformationen zu ermitteln, die bei jedem der mehreren Knoten angezeigt werden, und zu ermitteln, ob die ermittelten Knoten den voreingestellten Entsperrknoten entsprechen;
Hinweisinformationen, die den voreingestellten Entsperrknoten entsprechen, basierend auf den Hinweisinformationen zu ermitteln, die bei jedem der mehreren Knoten angezeigt werden, und zu ermitteln, ob die ermittelten Hinweisinformationen dem Ergebnis der Spracherkennung entsprechen; oder,
eine Hinweisinformationen-Kombination, die dem Entsperrpfad entspricht, der den voreingestellten Entsperrknoten entspricht, basierend auf den Hinweisinformationen zu ermitteln, die bei jedem der mehreren Knoten angezeigt werden, und zu ermitteln, ob die ermittelten Hinweisinformationen-Kombination dem Ergebnis der Spracherkennung entspricht.

13. Endgerät nach Anspruch 10, wobei
die Spracherkennungs-Engine (1001) ferner konfiguriert ist, Spracherkennung bei jedem Wort in der Spracheingabe durchzuführen und ein oder mehrere Kandidaten-Erkennungsergebnisse zu erlangen, die jedem Wort entsprechen; und
das Entsperrmodul (1002) ferner konfiguriert ist, für ein Wort mit mehreren Kandidaten-Erkennungsergebnissen einen besten Knoten, der dem Wort entspricht, basierend auf Knotenkonnektivitätsinformationen der Sperrschnittstelle und den Hinweisinformationen zu ermitteln, die bei jedem der mehreren Knoten angezeigt werden, und für ein einzelnes Wort mit einem Kandidaten-Erkennungsergebnis einen Knoten, der dem Wort entspricht, basierend auf den Hinweisinformationen zu ermitteln, die bei jedem der mehreren Knoten angezeigt werden, und jeden der ermittelten Knoten zu verbinden, die dem jeweiligen Wort entsprechen, um den entsprechenden Pfad zu erlangen.

14. Endgerät nach Anspruch 12, wobei das Entsperrmodul (1002) ferner konfiguriert ist,
zu ermitteln, ob es eine Eins-zu-eins-Beziehung zwischen den ermittelten Knoten und den voreingestellten Entsperrknoten gibt; oder
zu ermitteln, ob es eine Eins-zu-eins-Beziehung zwischen den ermittelten Knoten und den voreingestellten Entsperrknoten gibt, und zu ermitteln, ob eine Reihenfolge von Spracheingabe, die den ermittelten Knoten entspricht, einer Entsperrreihenfolge der voreingestellten Entsperrknoten entspricht.

15. Endgerät nach Anspruch 12, wobei das Entsperrmodul ferner konfiguriert ist,
zu ermitteln, ob es eine Eins-zu-eins-Beziehung zwischen den ermittelten Hinweisinformationen und dem Ergebnis der Spracherkennung gibt; oder
zu ermitteln, ob es eine Eins-zu-eins-Beziehung zwischen den ermittelten Hinweisinformationen und dem Ergebnis der Spracherkennung gibt, und zu ermitteln, ob Hinweisinformationen, die gemäß einer Entsperrreihenfolge der Entsperrknoten ermittelt werden, dem Ergebnis der Spracherkennung entsprechen.

## Revendications

1. Procédé de déverrouillage d'un dispositif terminal, le procédé comprenant :
l'affichage d'une interface de verrouillage comprenant une pluralité de noeuds sur un écran du dispositif terminal, dans lequel chacun de la pluralité de noeuds est affiché avec des informations d'invite identifiant chaque noeud ;
la détection d'une entrée vocale ;
l'exécution d'une reconnaissance vocale sur l'entrée vocale détectée par la détermination de noeuds identifiés par l'entrée vocale ;
la détermination si un résultat de la reconnaissance vocale correspond à des noeuds de déverrouillage préréglés sur la base des informations d'invite affichées sur chacun de la pluralité de noeuds ; et
si le résultat de la reconnaissance vocale correspond aux noeuds de déverrouillage préréglés,
le déverrouillage du dispositif terminal, et
l'affichage d'une interface de déverrouillage derrière l'interface de verrouillage,
dans lequel la détermination si le résultat de la reconnaissance vocale correspond aux noeuds de déverrouillage préréglés comprend :
la détermination des noeuds correspondant au résultat de la reconnaissance vocale sur la base des informations d'invite affichées sur chacun de la pluralité de noeuds, l'obtention d'une voie correspondante sur la base des noeuds déterminés, et
la détermination si la voie correspond à une voie de déverrouillage correspondant aux noeuds de déverrouillage préréglés.

2. Procédé de déverrouillage selon la revendication 1, comprenant en outre :
la détection d'une entrée sur l'interface de verrouillage, dans lequel l'entrée comprend la sélection d'au moins l'un de la pluralité de noeuds et comprend une entrée de toucher ou de survol ;
la détermination si les noeuds sélectionnés correspondent aux noeuds de déverrouillage préréglés ; et
lorsque les noeuds sélectionnés correspondent aux noeuds de déverrouillage préréglés,
le déverrouillage du dispositif terminal, et
l'affichage de l'interface de déverrouillage derrière l'interface de verrouillage.

3. Procédé de déverrouillage selon la revendication 1, dans lequel la détermination si le résultat de la reconnaissance vocale correspond aux noeuds de déverrouillage préréglés comprend l'une de :
la détermination de noeuds correspondant au résultat de la reconnaissance vocale sur la base des informations d'invite affichées sur chacun de la pluralité de noeuds, et la détermination si les noeuds déterminés correspondent aux noeuds de déverrouillage préréglés ;
la détermination d'informations d'invite correspondant aux noeuds de déverrouillage préréglés sur la base des informations d'invite affichées sur chacun de la pluralité de noeuds, et la détermination si les informations d'invite déterminées correspondent au résultat de la reconnaissance vocale ; et
la détermination d'une combinaison d'informations d'invite correspondant à la voie de déverrouillage correspondant aux noeuds de déverrouillage préréglés sur la base des informations d'invite affichées sur chacun de la pluralité de noeuds, et la détermination si la combinaison d'informations d'invite déterminée correspond au résultat de la reconnaissance vocale.

4. Procédé selon la revendication 1, dans lequel la détermination des noeuds correspondant au résultat de la reconnaissance vocale sur la base des informations d'invite affichées sur chacun de la pluralité de noeuds, et l'obtention de la voie correspondante sur la base des noeuds déterminés comprennent :
l'exécution d'une reconnaissance vocale sur chaque mot dans l'entrée vocale détectée ;
l'obtention d'un ou plusieurs résultats de reconnaissance candidats correspondant à chaque mot ;
la détermination, pour un mot avec plusieurs résultats de reconnaissance candidats, d'un meilleur noeud correspondant au mot sur la base d'informations de connectivité de noeud de l'interface de verrouillage et des informations d'invite affichées sur chacun de la pluralité de noeuds ;
la détermination, pour un mot avec un résultat de reconnaissance candidat, d'un noeud correspondant au mot sur la base des informations d'invite affichées sur chacun de la pluralité de noeuds ; et
le raccordement de chacun des noeuds déterminés correspondant à chaque mot pour obtenir la voie correspondante.

5. Procédé selon la revendication 3, dans lequel la détermination si les noeuds déterminés correspondent aux noeuds de déverrouillage préréglés comprend :
la détermination s'il existe une relation d'un à un entre les noeuds déterminés et les noeuds de déverrouillage préréglés ; ou
la détermination s'il existe une relation d'un à un entre les noeuds déterminés et les noeuds de déverrouillage préréglés, et la détermination si un ordre d'entrées vocales correspondant aux noeuds déterminés correspond à un ordre de déverrouillage des noeuds de déverrouillage préréglés.

6. Procédé selon la revendication 3, dans lequel la détermination si les informations d'invite déterminées correspondent au résultat de la reconnaissance vocale comprend :
la détermination s'il existe une relation d'un à un entre les informations d'invite déterminées et le résultat de la reconnaissance vocale ; ou
la détermination s'il existe une relation d'un à un entre les informations d'invite déterminées et le résultat de la reconnaissance vocale, et la détermination si les informations d'invite déterminées selon un ordre de déverrouillage des noeuds de déverrouillage correspondent au résultat de la reconnaissance vocale.

7. Procédé selon les revendications 3 à 6, comprenant en outre au moins l'un de :
l'affichage de la voie obtenue ou le non-affichage sur l'interface de verrouillage en fonction d'un réglage de sécurité ; et
l'affichage distinctif des noeuds correspondant au résultat de la reconnaissance vocale sur l'interface de verrouillage avec d'autres noeuds.

8. Procédé selon les revendications 1 à 7, dans lequel les informations d'invite affichées sur chacun de la pluralité de noeuds sont distribuées aléatoirement.

9. Procédé selon les revendications 1 à 8, comprenant en outre :
après l'affichage de l'interface de déverrouillage derrière l'interface de verrouillage, dans lequel l'interface de déverrouillage derrière l'interface de verrouillage comprend des icônes préréglées d'options de fonction ou d'applications, et chacune des icônes préréglées est affichée avec des informations d'invite sur l'icône ou autour de celle-ci,
la détection d'une entrée vocale,
l'exécution d'une reconnaissance vocale sur l'entrée vocale détectée,
la détermination d'une icône d'une option de fonction ou d'une application correspondant au résultat de la reconnaissance vocale sur la base des informations d'invite affichées sur les icônes des options de fonction ou des applications ou autour de celles-ci, et
l'exécution de la fonction ou de l'application correspondante.

10. Dispositif terminal, comprenant :
un moteur de reconnaissance vocale (1001) configuré pour effectuer la détection d'une entrée vocale, l'exécution d'une reconnaissance vocale sur l'entrée vocale détectée, et l'envoi d'un résultat de la reconnaissance vocale à un module de déverrouillage (1002) ;
le module de déverrouillage configuré pour effectuer :
la génération d'une interface de verrouillage comprenant une pluralité de noeuds, dans lequel chacun de la pluralité de noeuds est identifié par des informations d'invite, et
si le résultat de la reconnaissance vocale déterminant des noeuds identifiés par l'entrée vocale correspond à des noeuds de déverrouillage préréglés sur la base des informations d'invite pour chacun de la pluralité de noeuds :
le déverrouillage du dispositif terminal, et
la génération d'une interface de déverrouillage derrière l'interface de verrouillage ; et
un écran (1003) configuré pour effectuer l'affichage de l'interface de verrouillage générée comprenant la pluralité de noeuds et les informations d'invite associées, l'affichage d'une icône de microphone lorsqu'un démarrage du moteur de reconnaissance vocale est déclenché, et l'affichage de l'interface de déverrouillage derrière l'interface de verrouillage lorsque le dispositif terminal est déverrouillé,
dans lequel le module de déverrouillage est en outre configuré pour effectuer :
la détermination des noeuds correspondant au résultat de la reconnaissance vocale sur la base des informations d'invite affichées sur chacun de la pluralité de noeuds,
l'obtention d'une voie correspondante sur la base des noeuds déterminés, et
la détermination si la voie correspond à une voie de déverrouillage correspondant aux noeuds de déverrouillage préréglés.

11. Dispositif terminal de déverrouillage selon la revendication 10, dans lequel le module de déverrouillage (1002) est en outre configuré pour effectuer la détection d'une entrée de toucher sur l'interface de verrouillage, dans lequel l'entrée de toucher comprend la sélection d'au moins l'un de la pluralité de noeuds, la détermination si les noeuds sélectionnés correspondent aux noeuds de déverrouillage préréglés, et, lorsque les noeuds sélectionnés correspondent aux noeuds de déverrouillage préréglés, le déverrouillage du dispositif terminal et l'affichage de l'interface de déverrouillage derrière l'interface de verrouillage sur l'écran (1003).

12. Dispositif terminal selon la revendication 10, dans lequel le module de déverrouillage (1002) est en outre configuré pour effectuer :
la détermination de noeuds correspondant au résultat de la reconnaissance vocale sur la base des informations d'invite affichées sur chacun de la pluralité de noeuds, et la détermination si les noeuds déterminés correspondent aux noeuds de déverrouillage préréglés ;
la détermination d'informations d'invite correspondant aux noeuds de déverrouillage préréglés sur la base des informations d'invite affichées sur chacun de la pluralité de noeuds, et la détermination si les informations d'invite déterminées correspondent au résultat de la reconnaissance vocale ; ou
la détermination d'une combinaison d'informations d'invite correspondant à la voie de déverrouillage correspondant aux noeuds de déverrouillage préréglés sur la base des informations d'invite affichées sur chacun de la pluralité de noeuds, et la détermination si la combinaison d'informations d'invite déterminée correspond au résultat de la reconnaissance vocale.

13. Dispositif terminal selon la revendication 10, dans lequel
le moteur de reconnaissance vocale (1001) est en outre configuré pour effectuer l'exécution d'une reconnaissance vocale sur chaque mot dans l'entrée vocale, et l'obtention d'un ou plusieurs résultats de reconnaissance candidats correspondant à chaque mot ; et
le module de déverrouillage (1002) est en outre configuré pour effectuer la détermination, pour un mot avec plusieurs résultats de reconnaissance candidats, d'un meilleur noeud correspondant au mot sur la base d'informations de connectivité de noeud de l'interface de verrouillage et des informations d'invite affichées sur chacun de la pluralité de noeuds, et la détermination, pour un mot unique avec un résultat de reconnaissance candidat, d'un noeud correspondant au mot sur la base des informations d'invite affichées sur chacun de la pluralité de noeuds, et le raccordement de chacun des noeuds déterminés correspondant à chaque mot pour obtenir la voie correspondante.

14. Dispositif terminal selon la revendication 12, dans lequel le module de déverrouillage (1002) est en outre configuré pour effectuer :
la détermination s'il existe une relation d'un à un entre les noeuds déterminés et les noeuds de déverrouillage préréglés ; ou
la détermination s'il existe une relation d'un à un entre les noeuds déterminés et les noeuds de déverrouillage préréglés, et la détermination si un ordre d'entrées vocales correspondant aux noeuds déterminés correspond à un ordre de déverrouillage des noeuds de déverrouillage préréglés.

15. Dispositif terminal selon la revendication 12, dans lequel le module de déverrouillage est en outre configuré pour effectuer :
la détermination s'il existe une relation d'un à un entre les informations d'invite déterminées et le résultat de la reconnaissance vocale ; ou
la détermination s'il existe une relation d'un à un entre les informations d'invite déterminées et le résultat de la reconnaissance vocale, et la détermination si les informations d'invite déterminées selon un ordre de déverrouillage des noeuds de déverrouillage correspondent au résultat de la reconnaissance vocale.
